# EUROPÄISCHE PATENTSCHRIFT

(11) **EP 0 544 262 B1**
(45) Veröffentlichungstag und Bekanntmachung des Hinweises auf die Patenterteilung: **17.04.1996**
(21) Anmeldenummer: 92120107.5
(22) Anmeldetag: 25.11.1992
(51) Int. Cl.: E05F 15/00, F16P 3/00, H02H 5/10

(54) **Schaltungsanordnung für die Überwachung eines bewegten Gegenstandes**
Circuit for monitoring a moving object
Circuit pour surveiller un objet mouvant

(30) Priorität: 25.11.1991 DE 4138653
(43) Veröffentlichungstag der Anmeldung: 02.06.1993
(73) Patentinhaber: MARANTEC ANTRIEBS- UND STEUERUNGSTECHNIK GMBH & CO., PRODUKTIONS KG, D-33428 Marienfeld (DE)
(72) Erfinder: Hörmann, Michael, W-4834 Marienfeld (DE)
(74) Vertreter: Flügel, Otto, Dipl.-Ing.

(56) Entgegenhaltungen:
- WO-A-91/00406
- DE-A- 3 444 213
- GB-A- 2 045 467

## Beschreibung

Die Erfindung betrifft eine Schaltungsanordnung für die Überwachung von Abtasteinrichtungen zur Anzeige des bestimmungsgemäß bewegungsrichtungsabhängig und davon unabhängig auftretenden Betriebszuständen eines zwischen zwei Endstellungen hin- und hergehend bewegbaren Gegenstandes, insbesondere Torblatt in ein- oder mehrteiliger Ausführung, Schiebetor, Rollgitter, Rolladen, verfahrbare Dachkonstruktion, Hubfenster, Markise und dergleichen, bei der die Abtasteinrichtungen an eine Steuereinrichtung für den motorischen Antrieb des Gegenstandes angeschlossen sind.

Es ist bekannt, einen bewegten Gegenstand, in dessen Bewegungsbahn Hindernisse gelangen können, auf das Auftreten solcher Hindernisse zu überwachen und auch die technische Ausrüstung des Tores seibst für einen ungefährdeten Betrieb zu kontrollieren. Für den ersten Fall sei hier stellvertretend die sogenannte Schließkantensicherung genannt, die die sich in Schließrichtung nach vorn bewegende Kante abdeckt und bei Auftreffen auf ein Hindernis zur Abschaltung oder Bewegungsumkehr des Antriebsmotors dient und die beispielsweise bei Schiebetoren auch in jeder der beiden Bewegungsrichtungen des Gegenstandes vorgesehen ist. Zur Gattung der technischen Ausrüstung des bewegten Gegenstandes selbst zählen bei einem hier stellvertretend betrachteten Tor beispielsweise eine Gewichtsausgleichsfedereinrichtung, ein den Gegenstand tragendes Seil, die Betätigungseinrichtung bei Totmannbetrieb, die für die ungehinderte Torbewegung erforderliche Schließstellung einer Schlupftür, eine Fangeinrichtung und dergleichen. Die Überwachung dieser Ausrüstungen, die zum Teil auch bei nicht bewegtem Tor erfolgt, ist im übrigen bewegungsrichtungsunabhängig, d.h. sie führt immer zu einer Unterbrechung oder Verhinderung des Bewegungsantriebes, während die vorgenannten Schließkantensicherungen praktisch nur in der jeweils einen, zugeordneten Bewegungsrichtung "aktiv" sind.

Diese vielfältigen Überwachungsaufgaben werden mittels elektronischer Prozeßsteuerungen durchgeführt, die in sich wiederum auf Fehler überwacht werden müssen, naheliegend ggfs. derart, daß eine Überwachungseinrichtung bei Feststellung eines Funktionsfehlers der Prozeßsteuerung (Microcomputer) den Antrieb abschaltet bzw. dessen Einschaltung verhindert.

Überwachungseinrichtungen, die während der Bewegung des Torblattes - z.B. zur Personensicherung - unmittelbar wirksam sein sollen, werden aufgrund ihren direkten Sicherungsaufgabe einen regelmäßigen Test unterzogen, am Beispiel einer pneumatisch arbeitenden Schließkantensicherung durch Imitation eines Auftreffalles (Hindernis im Schließweg) durch ein gezieltes Eindrücken des Hohlprofiles dieser Sicherungsleiste. Dies kann nur außerhalb der für diese Leiste relevanten Überwachungsaufgabe, d.h. dem Durchlaufen der ihr zugeordneten Schließbewegungsstrecke erfolgen, so daß die Funktionssicherheitsüberwachung dieser Leiste entsprechend begrenzt ist. Im übrigen ist eine solche Schließkantensicherung "das letzte Glied in der Kette", weil sie auch nach Federbruch der Gewichtsausgleichseinrichtung, Seilriß oder dergleichen noch eine insoweit nachgeschaltete Sicherheitsfunktion für dadurch zum Absturz neigende Torblätter erfüllt.

Der Erfindung liegt daher die Aufgabe zugrunde, die unmittelbaren Überwachungsaufgaben sicherzustellen und die Funktionskontrolle für dazu eingesetzte Einrichtungen besser handhabbar zu gestalten. Dies wird bei der eingangs erwähnten Schaltungsanordnung erfindungsgemäß dadurch erreicht, daß die oder zumindest eine der bewegungsrichtungsabhängig arbeitenden Abtasteinrichtungen sowohl an eine zentrale Auswerteschaltung als auch parallel dazu an eine der beiden bewegungsrichtungsorientierten Schalteinheiten der Steuereinrichtung angeschlossen ist, wogegen die oder zumindest eine der unabhängig von der Bewegungsrichtung des Gegenstandes ansprechende Abtasteinrichtung an die zentrale Auswerteschaltung und an beide bewegungsrichtungsorientierte Schalteinheiten angeschlossen ist.

Erfindungsgemäß ist die oder zumindest eine der unabhängig von der Bewegungsrichtung des Gegenstandes ansprechende Abtasteinrichtung an die Auswerteschaltung und zugleich parallel dazu an beide bewegungsrichtungsorientierte Schalteinheiten der Steuereinrichtung angeschlossen, so daß diese unabhängig von der Bewegungsrichtung des Gegenstandes ansprechen, und zwar entweder über die Auswerteschaltung und/oder bei deren Ausfall oder Störung direkt über beide bewegungsrichtungsorientierte Schalteinheiten. Dagegen sind die von der Bewegungsrichtung des Gegenstandes abhängigen Abtasteinrichtungen parallel zur Auswerteschaltung direkt an die jeweils bewegungsrichtungsmäßig zugeordnete Schalteinheit angeschlossen, weil der Mikroprozessor - bedingt durch Software- oder Halbleiterstörungen - ausfallen kann. Der direkte Anschluß an die Schalteinheiten bewirkt dann, daß bei Störung der Auswerteschaltung in jedem Falle ein sicheres Abschalten der Schalteinheiten stattfindet, und zwar getrennt nach Überwachungen in Abhängigkeit von den Bewegungsrichtungen und an Überwachungen, die unabhängig von der Bewegungsrichtung des Gegenstandes erfolgen. Dadurch erreicht man, daß beispielsweise eine Überprüfung der bewegungsrichtungsabhängigen Abtasteinrichtungen während der Bewegungsrichtungsphase vorgenommen werden kann, in der die dieser Bewegungsrichtung zugeordnete Überwachung der jeweiligen Abtasteinrichtung nicht erfolgt. Da nämlich die bewegungsrichtungsabhängigen Abtasteinrichtungen immer in einer Bewegungsrichtung nicht aktiv sind, (z.B. eine Schließkantensicherung "Tor zu" in Bewegungsrichtung "Tor auf"), werden diese Abtasteinrichtungen in diesen nicht aktiven Laufrichtungen getestet, d.h. sie geben Signale ab, die nicht zu einer Abschaltung führen dürfen. Deshalb sind diese Abtasteinrichtungen parallel jeweils nur mit einer bewegungsrichtungsorientierten Schalteinheit verbunden, der sie bewegungsrichtungsmäßig zugeordnet sind.

Die Abtasteinrichtungen, die in beiden Bewegungsrichtungen betriebsmäßig aktiv sind, werden - wenn überhaupt - nicht während des Torlaufes, sondern nur bei Stillstand des Tores getestet, so daß ein Ansprechen der Abtasteinrichtungen, das durch ein Testsignal bedingt ist, nicht zur Abschaltung in einer Bewegungsrichtung führt. Wie grundsätzlich bekannt, kann man solche Testungen auch in einer Anfangsbewegungsphase ausführen, die dann insoweit von der Überwachung ausgeschlossen ist.

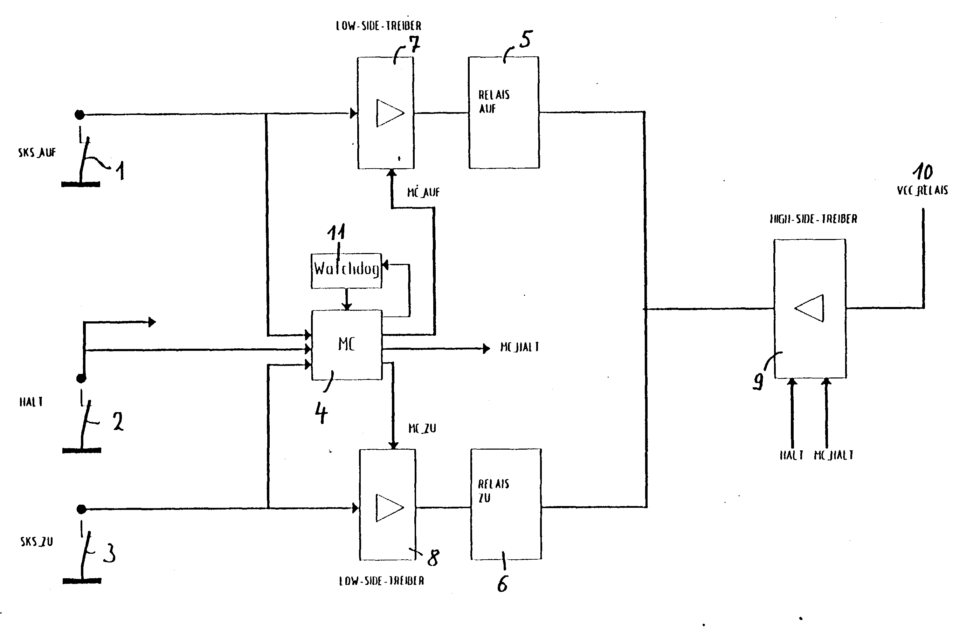

Bevorzugte Ausführungen der Erfindung ergeben sich aus den Unteransprüchen, insbesondere in bezug auf das in der Zeichnung wiedergegebene Ausführungsbeispiel, anhand dessen die Erfindung nachstehend näher erläutert wird:

Die Zeichnung zeigt schematisch ein Blockschaltbild eines Ausführungsbeispieles, bei welchem symbolhaft drei Schalter Ruhestromkreise andeutend stellvertretend für zu überwachende Einrichtungen stehen. Dabei handelt es sich bei Schalter 1 und Schalter 3 um beispielsweise Schließkantensicherungen, die also bewegungsrichtungsabhängig arbeiten, während Schalter 2 als Beispiel für eine Federbruchsicherung, Schlaffseilsicherung, Schlupftürüberwachung, Fangeinrichtungsüberwachung, Totmannüberwachungseinrichtung und dergleichen steht, also Überwachungsaufgaben, die bewegungsrichtungsunabhängig sind. Diese letzteren Überwachungseinrichtungen sind hier auch als Ausrüstungen des zu bewegenden Gegenstandes bezeichnet. Die Signale sämtlicher Überwachungseinrichtungen werden zum einen einem Mikrocomputer als Auswerteschaltung 4 zugeführt, dessen Ausgänge auf Treiberschaltungen für Relaissteuerglieder eines Antriebsmotors arbeiten, die bewegungsrichtungsorientierte Schalteinheiten 5 und 6 bilden, also jeweils ein Relaissteuerglied für eine der beiden Antriebsbewegungsrichtungen. Die Relaissteuerglieder 5 und 6 weisen je zwei Steuereingänge auf, über die sie jeweils eingeschaltet werden können, nämlich zum einen über Treiberschaltungen 7 und 8 für eine erste Anschaltungsmöglichkeit von der Niederpotentialseite der Spannungsversorgung her und über eine beiden Relaissteuergliedern gemeinsame Treiberschaltung 9 für eine zweite Anschaltung der Relaissteuerglieder 5 und 6 von der Hochpotentialseite her. Die letztere Treiberschaltung 9 wird in Abhängigkeit von dem die bewegungsrichtungsunabhängig überwachenden Einrichtungen symbolisierenden Schalter 2 und von einem Ausgang des Mikrocomputers 4 angesteuert, während die beiden anderen Treiberschaltungen 7 und 8 bewegungsrichtungsabhängig dadurch betrieben werden, daß sie zum einen unmittelbar an die die bewegungsrichtungsabhängig arbeitenden Einrichtungen bzw. Schließkantensicherungen symbolisierenden Schalter 1 bzw. 3 angeschlossen sind und zugleich mit entsprechenden Ausgängen des Mikrocomputers verbunden sind. Auf diese Weise-gelingt es, über sämtliche Abtasteinrichtungen - Schalter 1 bis 3 - den Mikrocomputer 4 anzusteuern, der sowohl die Testung als auch die Betätigung der Relaissteuerglieder direkt oder indirekt übernimmt, während für den Fall der bewegungsrichtungsabhängigen Abtasteinrichtungen jeweils ein Bypassweg nur für das bewegungsrichtungsmäßig zugeordnete Relaissteuerglied vorgesehen ist und für das oder die bewegungsrichtungsunabhängig arbeitenden Abtasteinrichtungen ein Bypassweg "HALT" zu dem beide Relaissteuerglieder 5-und 6 betätigenden Treiber 9 vorgesehen ist, der desweiteren über eine Leitung "MC-HALT" an einen Ausgang des Mikrocomputers 4 angeschlossen ist. An andere Ausgänge des Mikrocomputers 4 sind über entsprechende Leitungen die Treiberstufen 7 und 8 angeschlossen.

Wie bei 11 angedeutet, ist eine Selbstüberwachung für den Mikrocomputer 4 vorgesehen, während bei 10 die Spannungsversorgung für die Schaltung angeschlossen ist.

Soweit die Überwachungseinrichtungen zumindest zum Teil, beispielsweise die Überwachung auf Hindernisse in der Bewegungsstrecke des Gegenstandes, durch Abfragen der Bewegungsgeschwindigkeit pro Zeiteinheit, Antriebsmotordrehmoment oder dergleichen gebildet sind, werden zur Signalformung entsprechende Schwellwertschalteinrichtungen (z.B. EP 0 083 947 B1) in die Signalleitungen zu den Treiberschaltungen und dem Mikrocomputer eingesetzt.

Wie an dem vorstehend geschilderten Beispiel gezeigt, ist die für den Alarmfall erforderliche Anschaltung der bewegungsrichtungsabhängigen Schalteinheiten bzw. Relaissteuerglieder auch dann sichergestellt, wenn der Mikrocomputer, der die Testung der Abtasteinrichtungen vornimmt oder veranlaßt, auf irgendeine Weise in seiner Funktion gestört ist.

## Patentansprüche

1. Schaltungsanordnung für die Überwachung von Abtasteinrichtungen (1 - 3) zur Anzeige des bestimmungsgemäß bewegungsrichtungsabhängig und davon unabhängig auftretenden Betriebszuständen eines zwischen zwei Endstellungen hin- und hergehend bewegbaren Gegenstandes, insbesondere Torblatt in ein- oder mehrteiliger Ausführung, Schiebetor, Rollgitter, Rolladen, verfahrbare Dachkonstruktion, Hubfenster, Markise und dergleichen, bei der die Abtasteinrichungen (1 - 3) an eine Steuereinrichtung (4 - 9) für den motorischen Antrieb des Gegenstandes angeschlossen sind, die zwei Schalteinheiten (5, 6) umfaßt, von denen je eine einer der beiden Bewegungsrichtungen des Gegenstandes zugeordnet ist,
**dadurch gekennzeichnet,**
daß die oder zumindest eine der bewegungsrichtungsabhängig arbeitenden Abtasteinrichtungen (1, 3) sowohl an eine zentrale Auswerteschaltung (4) als auch parallel dazu an eine der beiden bewegungsrichtungsorientierten Schalteinheiten (5, 6) der Steuereinrichtung (4 - 9) angeschlossen ist, wogegen die oder zumindest eine der unabhängig von der Bewegungsrichtung des Gegenstandes ansprechende Abtasteinrichtung (2) an die zentrale Auswerteschaltung (4) und an beide bewegungsrichtungsorientierten Schalteinheiten (5, 6) angeschlossen ist.

2. Schaltungsanordnung nach Anspruch 1,
**dadurch gekennzeichnet,**
daß die bewegungsrichtungsabhängig arbeitenden Abtasteinrichtungen (1, 3) Schließkantensicherungseinrichtungen oder dergleichen wiederholten Testvorgängen unterliegende Überwachungseinrichtungen sind.

3. Schaltungsanordnung nach Anspruch 1 oder 2,
**dadurch gekennzeichnet,**
daß zumindest eine der bewegungsrichtungsunabhängig arbeitenden Abtasteinrichtungen (2) als wiederholten Testvorgängen unterliegende Überwachungseinrichtung, beispielsweise Fangeinrichtung mit elektrischer Signalgebung, Schlupftür mit Überwachungskontakteinrichtung oder dergleichen, ausgebildet ist.

4. Schaltungsanordnung nach Anspruch 2 oder 3,
**dadurch gekennzeichnet,**
daß die Testvorgänge durch die Auswerteschaltung (4) veranlaßt und/oder im Ergebnis überprüft sind.

5. Schaltungsanordnung nach einem der Ansprüche 1 bis 4,
**dadurch gekennzeichnet,**
daß die Schalteinheiten (5, 6) der Steuereinrichtung (4 bis 9) jeweils zwei Steuereingänge aufweisen.

6. Schaltungsanordnung nach Anspruch 5,
**dadurch gekennzeichnet,**
daß die einen Steuereingänge der Schalteinheiten (5, 6) von der bzw. den bewegungsrichtungsabhängig arbeitenden Abtasteinrichtungen (1, 3) her und die anderen Steuereingänge von der wenigstens einen bewegungsrichtungsunabhängig arbeitenden Abtasteinrichtung (2) her erreichbar sind.

7. Schaltungsanordnung nach Anspruch 6,
**dadurch gekennzeichnet,**
daß den einen Eingängen der Schalteinheiten (5, 6) jeweils eine Treiberschaltung (7 und 8), deren Eingänge mit jeweils einem der bewegungsrichtungsabhängig arbeitenden Abtasteinrichtungen (1, 3) verbunden sind, und den anderen Eingängen dieser Schalteinheiten (5, 6) eine Treiberschaltung (9), deren Eingang mit der wenigstens einen bewegungsrichtungsunabhängig arbeitenden Abtasteinrichtung (2) verbunden ist, vorgeordnet sind.

8. Schaltungsanordnung nach Anspruch 7,
**dadurch gekennzeichnet,**
daß sämtliche Treiberschaltungen (7, 8, 9) über weitere Eingänge an die Ausgänge der Auswerteschaltung (4) angeschlossen sind.

## Claims

1. A circuit arrangement for the control of sensing devices (1 to 3) for indicating the operating condition occurring as a function of the direction of movement, as specified, and the operating condition occurring independently therefrom of an object movable between two end positions, more particularly a doorleaf in a single- or multi- part construction, a sliding door, a roller shutter, a roller blind, a displaceable roof construction, a lifting window, an awning or the like, the sensing devices (1 to 3) of said circuit arrangement being connected to a control device (4 to 9) for the motor drive of the object, which control device comprises two switching units (5, 6) each one of which is associated with one of the two directions of movement of the object, characterised in that the sensing devices (1, 3), or at least one thereof, which operate as a function of the direction of movement, are connected both to a central evaluation circuit (4) and, in parallel thereto, to one of the two switching units (5, 6) of the control device (4 to 9), which are oriented in the direction of movement, whilst the sensing device (2), or at least one thereof, which responds independently of the direction of movement of the object, is connected to the central evaluation circuit (4) and to both switching units (5, 6) oriented in the direction of movement.

2. A circuit arrangement according to claim 1, characterised in that the sensing devices (1, 3) which operate as a function of the direction of movement are securing devices for the closing edges or monitoring devices which carry out repeated checking operations of the same kind.

3. A circuit arrangement according to claim 1 or 2, characterised in that at least one of the sensing devices (2) which operates independently of the direction of movement is constructed as a monitoring device carrying out repeated checking operations, for example a catch device with an electric signal supply, a slipping door with a monitoring contact device or the like.

4. A circuit arrangement according to claim 2 or 3, characterised in that the checking operations are induced by the evaluation circuit (4) and/or their result is checked.

5. A circuit arrangement according to one of claims 1 to 4, characterised in that the switching units (5, 6) of the control device (4 to 9) each have two control inputs.

6. A circuit arrangement according to claim 5, characterised in that one of the control inputs of the switching units (5, 6) may be reached from the sensing device/s (1, 3) which operates/operate as a function of the direction of movement, and the other control input may be reached from the at least one sensing device (2) which operates independently of the direction of movement.

7. A circuit arrangement according to claim 6, characterised in that a driving circuit (7 and 8), whose inputs are each connected with one of the sensing devices (1, 3) operating as a function of the direction of movement, is connected to one of the inputs of the switching units (5, 6), and that a driving circuit (9), whose input is connected with the sensing device (2) of which there is at least one and which operates independently of the direction of movement, is connected to the other inputs of said switching units (5, 6).

8. A circuit arrangement according to claim 7, characterised in that all the driving circuits (7, 8, 9) are connected to the outputs of the evaluation circuit (4), via further inputs.

## Revendications

1. Circuit pour la surveillance d'installations de détection (1-3) indiquant des états de fonctionnement dépendant du sens du mouvement, selon la détermination ou indépendants de celui-ci, selon les prescriptions pour un objet mobile alternativement entre deux positions de fin de course, notamment un panneau de porte selon une réalisation en une ou plusieurs parties, une porte coulissante, une grille roulante, un volet roulant, une structure de toit mobile, des fenêtres relevables, des marquises ou analogues, les installations de détection (1-3) étant reliées à une installation de commande (4-9) pour l'entraînement motorisé de l'objet et comprenant deux unités de commutation (5, 6), chacune étant associée à l'un des deux sens de déplacement de l'objet, caractérisé en ce que la ou au moins l'une des installations de détection (1, 3) travaillant en fonction du sens de déplacement, est reliée à un circuit d'exploitation central (4) ainsi qu'en parallèle à l'une des deux unités de commutation (5, 6) de l'installation de commande (4-9), orientée suivant le sens de déplacement, alors que la ou au moins l'une des installations de détection (2) mise en oeuvre indépendamment du sens de déplacement de l'objet est reliée au circuit d'exploitation central (4), et au deux unités de commutation (5, 6) orientées suivant le sens du mouvement.

2. Circuit selon la revendication 1, caractérisé en ce que les installations de détection (1, 3), fonctionnant selon le sens du mouvement, sont des installations de contrôle surveillant des installations de sécurité de bords de fermeture ou autre par des opérations d'essais.

3. Circuit selon les revendications 1 ou 2, caractérisé en ce qu'au moins l'une des installations de détection (2) travaillant indépendamment du sens du mouvement est une installation de surveillance soumise à des opérations d'essais répétées, par exemple des installations d'accrochage avec émission de signaux électriques, des portes coulissantes avec installation de surveillance de contacts, ou analogues.

4. Circuit selon l'une des revendications 2 ou 3, caractérisé en ce que les opérations d'essais sont déclenchées par le circuit d'exploitation (4) et/ou leur résultat est contrôlé.

5. Circuit selon l'une des revendications 1 à 4, caractérisé en ce que les unités de commutation (5, 6) de l'installation de commande (4-9) comportent chaque fois deux entrées de commande.

6. Circuit selon la revendication 5, caractérisé en ce que les unes des entrées de commande peuvent être atteintes par des unités de commutation (5, 6) de la ou des installations de détection (1, 3) travaillant en fonction du sens du mouvement, et les autres entrées de commande par au moins une installation de détection (2) travaillant indépendamment du sens du mouvement.

7. Circuit selon la revendication 6, caractérisé en ce que les unes des entrées des unités de commutation (5, 6) sont précédées chaque fois d'un circuit d'entraînement (7, 8) dont les entrées sont respectivement reliées à l'une des installations de détection 1, 3 travaillant en fonction du sens du mouvement et les autres entrées de ces unités de commutation (5, 6) comportent un circuit d'entraînement (9) dont l'entrée est reliée à au moins l'une des installations de détection (2) travaillant indépendamment du sens du mouvement.

8. Circuit selon la revendication 7, caractérisé en ce que tous les circuits d'entraînement (7, 8, 9) sont reliés par d'autres entrées aux sorties du circuit d'exploitation (4).
